# EUROPEAN PATENT APPLICATION

(11) **EP 4 822 865 A1**
(43) Date of publication of application: **14.10.2026**
(21) Application number: 25913191.0
(22) Date of filing: 26.11.2025
(51) Int. Cl.: H01M 50/375, H01M 50/342, H01M 50/291, H01M 50/271

(54) **CELL ASSEMBLY AND BATTERY PACK COMPRISING SAME**

(30) Priority: 23.12.2024 KR 20240193616
(71) Applicant: LG Energy Solution, Ltd., Seoul 07335 (KR)
(72) Inventor: LEE, Joo Hyoung, Daejeon 34122 (KR); JUNG, Hye Mi, Daejeon 34122 (KR); LEE, Jung Hoon, Daejeon 34122 (KR); KIM, Kwang Mo, Daejeon 34122 (KR)
(74) Representative: BCKIP Part mbB
(86) International application number: PCT/KR2025/019784
(87) International publication number: WO 2026/142005

(57) **Abstract**

The present disclosure relates to a cell assembly and a battery pack including the same, the cell assembly including: a cell block including a plurality of battery cells; a protective cover coupled to the front and rear of the cell block, respectively; and a module frame surrounding the circumference of the cell block so that the cell block is sealed and coupled to the protective cover, wherein the module frame includes at least one melting groove at an upper portion thereof.

## Description

### [Technical Field]

The present disclosure relates to a cell assembly and a battery pack comprising the same.

This application claims the benefit of priority from Korean Patent Application No. 10-2024-0193616, filed on December 23, 2024, the entire contents disclosed therein are incorporated by reference into this disclosure.

### [Background]

In general, a battery cell comprises an electrode assembly in which electrodes and separators are alternately stacked, an electrode lead coupled to the electrodes of the electrode assembly, a case through which the electrode lead is drawn out to the outside and which surrounds the electrode assembly, and an electrolyte solution filled together with the electrode assembly inside the case.

The battery cell may be broadly classified into a cylindrical cell, a pouch-type cell, and a prismatic cell depending on the shape of the case.

Meanwhile, battery cells may be used alone, but in general, a plurality of battery cells are often configured in a form in which they are electrically connected to each other in series and/or in parallel. In particular, a plurality of battery cells electrically connected to each other constitute one cell block. In addition, the cell block may be housed inside a module frame to constitute one cell assembly.

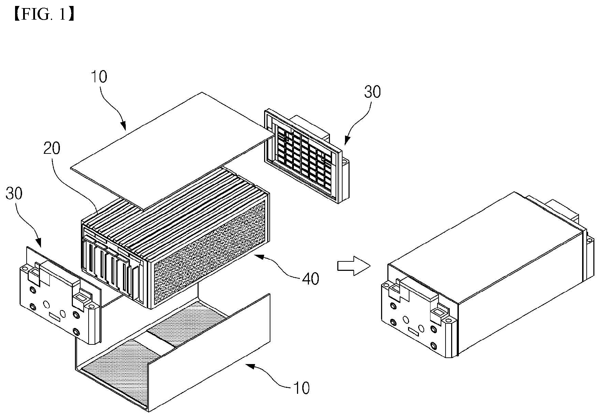

FIG. 1 is an exploded perspective view and a perspective view of a conventional cell assembly in which battery cells 20 are accommodated.

The cell assembly accommodating the battery cells 20 may have a protective cover 30 coupled to the front and rear surfaces of the cell block 40.

Accordingly, the cell block 40 may be protected while being blocked from the outside by the module frame 10 and the protective cover 30.

The module frame 10 surrounding the circumference of the cell block 40 is made of a metal material in order to effectively release heat from the cell block 40.

Such a sealing structure can protect the internal cell block 40 from external impact, flame, and the like.

However, in such a cell assembly, when high-temperature gas is generated in the internal cell block 40, the gas cannot be effectively released, which may lead to thermal runaway. At this time, there is a risk that the cell assembly that has undergone thermal runaway may explode violently due to a drastic increase in gas pressure.

In the case of a conventional battery pack, such cell assemblies are accommodated in a single space, and if an explosion occurs in any one cell assembly, there is a possibility that the impact may cause a chain explosion of other adjacent cell assemblies.

### [Summary]

### [Technical Problem]

Accordingly, the present disclosure has been conceived to solve the above-described problems, and an object of the present disclosure is to provide a cell assembly having a structure capable of effectively suppressing thermal runaway to improve safety, and a battery pack comprising the same.

Other objects and advantages of the present disclosure may be understood by the following description, and will be more clearly understood by embodiments of the present disclosure. In addition, it will be easily understood that the objects and advantages of the present disclosure can be realized by means and combinations thereof indicated in the claims.

### [Technical Solution]

According to the present disclosure, there is provided a cell assembly comprising: a cell block comprising a plurality of battery cells; a protective cover coupled to the front and rear of the cell block, respectively; and a module frame surrounding the circumference of the cell block and coupled to the protective cover so that the cell block is sealed, wherein the module frame comprises at least one melting groove at an upper portion thereof.

An upper protective coating layer having resistance to heat and flame may be provided on an outer surface of the module frame.

A lower protective coating layer having resistance to heat and flame may be provided on an inner surface of the module frame.

The lower protective coating layer may be provided only in a region excluding the melting groove.

The module frame may comprise: a bottom support portion supporting a lower portion of the cell block; a pair of side support portions extending upward from both ends of the bottom support portion to support side portions of the cell block; and a cover portion having both ends coupled to the side support portions, respectively, to face the bottom support portion, and covering an upper portion of the cell block, wherein the melting groove may be formed at a lower portion of the cover portion.

The melting groove may comprise: a bottom portion formed to a certain depth in a thickness direction of the cover portion.

At the cover portion, a ratio of a thickness of the bottom portion of the melting groove to a thickness of a region excluding the melting groove may be 0.1:1 to 0.8:1.

An edge shape of the bottom portion may be any one of a circular shape and a polygonal shape.

The bottom portion may have a flat shape.

The bottom portion may have an inclined surface formed such that the thickness gradually decreases toward the center.

The melting groove may be formed to a certain depth in the thickness direction of the cover portion from the edge of the bottom portion.

The bottom portion may comprise: a first bottom portion; and a second bottom portion formed to a certain depth in the thickness direction of the cover portion from the edge [27] of the first bottom portion, and formed continuously along the edge of the first bottom portion. The second bottom portion may be formed to be spaced apart from the edge of the first bottom portion by a predetermined distance.

According to the present disclosure, there is provided a battery pack in which at least one cell assembly is accommodated.

The battery pack comprises: a pack case in which the cell assembly is seated; and an upper case coupled to the pack case to cover an upper portion of the cell assembly.

### [Advantageous Effects]

According to the present disclosure, it is possible to suppress the phenomenon of the cell assembly exploding.

In addition, in a battery pack accommodating a plurality of cell assemblies, it is possible to suppress the phenomenon in which flame and high-temperature gas intrude into other adjacent cell assemblies even when any one cell assembly undergoes thermal runaway.

### [Brief Description of the Drawings]

FIG. 1 is an exploded perspective view and a perspective view of a conventional cell assembly.
FIG. 2 is a perspective view of a cell assembly according to a first embodiment of the present disclosure.
FIG. 3 is a bottom perspective view of a cover portion included in the cell assembly of FIG. 2.
FIG. 4 is a cross-sectional view of the cell assembly of FIG. 2.
FIG. 5 is a schematic view briefly illustrating a thermal runaway situation of a cell block.
FIG. 6 is a cross-sectional view of a modification of the cell assembly of FIG. 2.
FIG. 7 is a cross-sectional view of another modification of the cell assembly of FIG. 2.
FIG. 8 is a cross-sectional view of a melting groove included in a cell assembly according to a second embodiment of the present disclosure.
FIG. 9 is a cross-sectional perspective view of the melting groove of FIG. 8.
FIG. 10 is a cross-sectional view of a melting groove included in a cell assembly according to a third embodiment of the present disclosure.
FIG. 11 is a cross-sectional perspective view of the melting groove of FIG. 10.
FIG. 12 is a cross-sectional view of a melting groove included in a cell assembly according to a fourth embodiment of the present disclosure.
FIG. 13 is a cross-sectional perspective view of the melting groove of FIG. 12.
FIG. 14 is a perspective view of a battery pack of the present disclosure.

### [Detailed Description]

Hereinafter, preferred embodiments of the present disclosure will be described in detail with reference to the accompanying drawings. Prior to this, terms and words used in the present specification should not be construed as limited to conventional or dictionary meanings and should be interpreted with the meaning and concept in accordance with the technical idea of the present disclosure based on the principle that the inventors can appropriately define the meanings of terms or words in order to explain the invention in the best way.

Therefore, it should be understood that the embodiments and drawings are merely examples of the present disclosure and do not represent all of the technical spirit of the present disclosure, and that there may be various equivalents and modifications that can replace them at the time of the present application.

In addition, when it is determined that detailed descriptions of known configurations or functions may obscure the gist of the present disclosure in describing the present disclosure, the detailed descriptions thereof are omitted.

Since the embodiments of the present disclosure are provided to more completely explain the present disclosure to a person skilled in the art, shapes and sizes of components in the drawings may be exaggerated, omitted, or schematically illustrated for clearer explanation. Therefore, the size or proportion of each component does not entirely reflect the actual size or proportion.

Similar reference numerals are used for similar components while describing each drawing. In the accompanying drawings, dimensions of structures are enlarged than actual for clarity of the present disclosure. Terms used to describe various components are for the purpose of understanding, and the components should not be limited by the terms. The terms are used only for the purpose of distinguishing one component from another component. For example, a first component could be termed a second component, and, similarly, a second component could be termed a first component, without departing from the scope of the present disclosure. Singular expressions include plural expressions unless the context clearly indicates otherwise.

In this specification, terms such as "include," "comprise," or "have" should be understood to specify the presence of features, numbers, steps, operations, components, or combinations thereof described in the specification, and should be understood as not precluding the presence or possibility of addition of one or more other features, numbers, steps, operations, components, or combinations thereof.

In addition, when a part of a layer, film, region, plate, or the like is disposed "on" another part, this includes not only a case in which one part is disposed "directly on" another part, but also a case in which still another part is interposed therebetween. In contrast, when a part of a layer, film, region, plate, or the like is disposed "under" another part, this includes not only a case in which one part is disposed "directly under" another part, but also a case in which still another part is interposed therebetween. In addition, being disposed "on" in the specification of the present disclosure may include a case in which it is disposed not only on the upper portion but also on the lower portion.

The present disclosure relates to a cell assembly and a battery pack comprising the same, and the cell assembly of the present disclosure is characterized in that it comprises a plurality of melting grooves at an upper portion thereof.

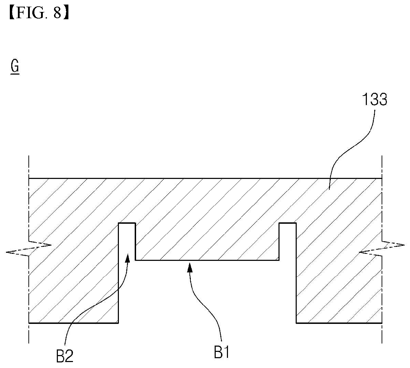

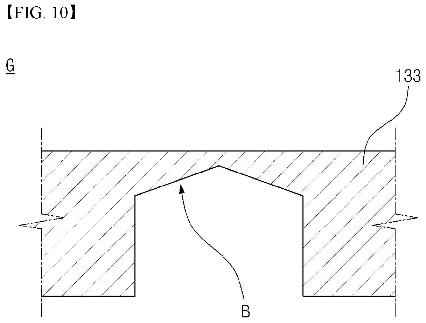

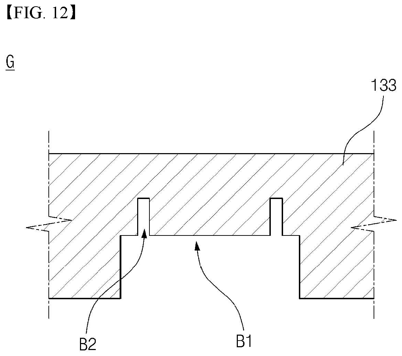

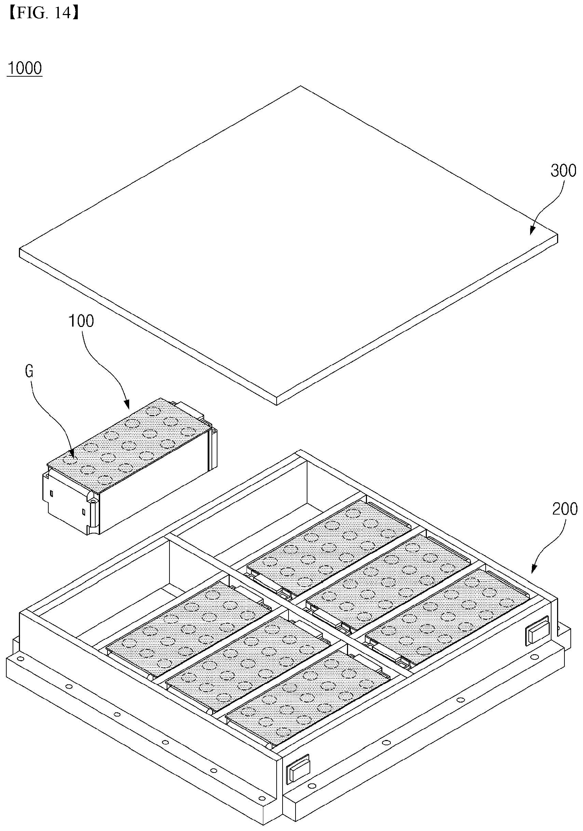

FIG. 1 to FIG. 7 relate to a cell assembly according to a first embodiment of the present disclosure, FIG. 8 to FIG. 9 relate to a cell assembly according to a second embodiment of the present disclosure, FIG. 10 to FIG. 11 relate to a cell assembly according to a third embodiment of the present disclosure, FIG. 12 to FIG. 13 relate to a cell assembly according to a fourth embodiment of the present disclosure, and FIG. 14 relates to a battery pack of the present disclosure.

Hereinafter, specific embodiments of the cell assembly and the battery pack comprising the same of the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

(In addition, a longitudinal direction of a certain component refers to a direction corresponding to a surface having the longest length of the component shown in the drawings based on a horizontal direction, and a width direction of a certain component is defined to refer to a direction perpendicular to the longitudinal direction based on the horizontal direction.)

In the present disclosure, the width direction of the cell assembly is defined as the direction in which the battery cells are stacked, and the longitudinal direction of the cell assembly is defined as the direction orthogonal to the width direction of the cell assembly.

In addition, the width direction of the battery pack refers to the longitudinal direction of the cell assembly accommodated in the battery pack, and the longitudinal direction of the battery pack refers to the width direction of the cell assembly accommodated in the battery pack.

### Cell Assembly 100

### (First Embodiment)

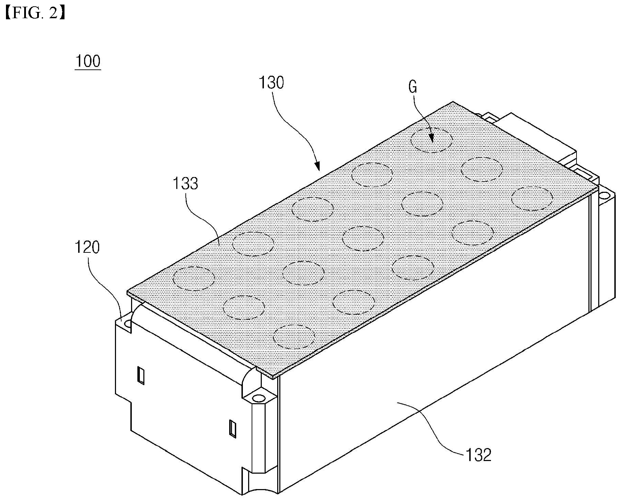

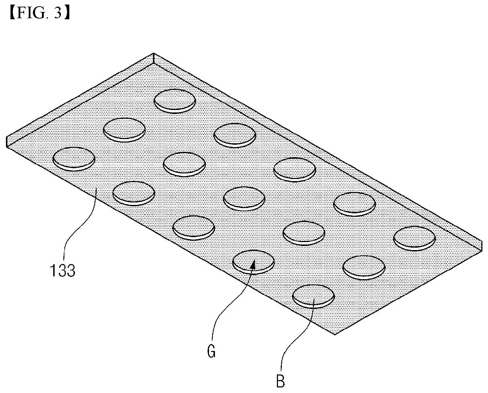

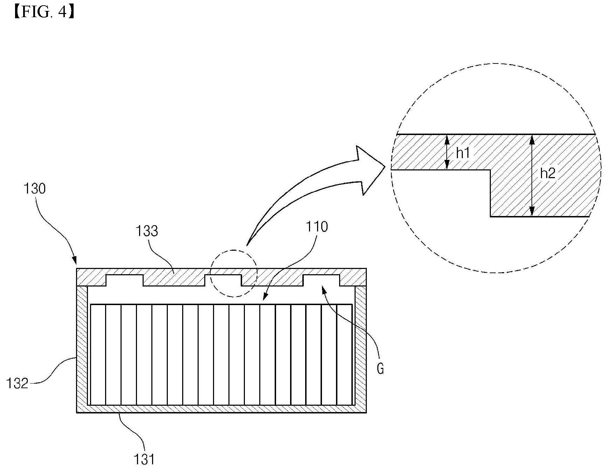

FIG. 2 is a perspective view of a cell assembly 100 according to a first embodiment of the present disclosure, FIG. 3 is a bottom perspective view of a cover portion 133 included in the cell assembly 100 of FIG. 2, and FIG. 4 is a cross-sectional view of the cell assembly 100 of FIG. 2.

As shown in FIG. 2 to FIG. 4, a cell assembly 100 of the present disclosure comprises a cell block comprising a plurality of battery cells, a protective cover 120 coupled to the front and rear of the cell block, respectively, and a module frame 130 surrounding the circumference of the cell block so that the cell block is sealed and coupled to the protective cover 120.

The cell block is protected from the outside by a pair of protective covers 120 and a module frame 130 surrounding the circumference of the cell block and coupled to the protective cover 120.

The cell assembly 100 is characterized in that it comprises at least one melting groove G at an upper portion of the module frame 130.

The module frame 130 comprises a bottom support portion 131 supporting a lower portion of the cell block, a pair of side support portions 132 supporting side portions of the cell block, and a cover portion 133 covering an upper portion of the cell block.

The pair of side support portions 132 are formed to extend upward from both ends of the bottom support portion 131.

The cover portion 133 has both ends coupled to the side support portions 132, respectively, to face the bottom support portion 131.

The melting groove G is formed at a lower portion of the cover portion 133, as shown in FIG. 3.

The melting groove G formed at the lower portion of the cover portion 133 comprises a bottom portion B formed at a predetermined depth in the thickness direction of the cover portion 133.

The shape of the bottom portion B is not particularly limited. For example, the bottom portion B may be circular or polygonal.

The bottom portion B may be formed in a flat shape, as shown in FIG. 3 and FIG. 4.

In the cell assembly 100 of the present disclosure, the thickness h1 of the bottom portion B is formed to be thin.

In the cover portion 133, the thickness h1 of the bottom portion B of the melting groove G is formed to be thinner than the thickness h2 of the region excluding the melting groove G.

When the thickness h1 of the bottom portion B is thin, as the cover portion 133 comes into contact with external flame and high-temperature heat, the melting groove G may be melted or damaged first and opened. The formation of such an opening can suppress a larger explosion by reducing the internal pressure of the cell assembly 100.

Specifically, the ratio of the thickness h1 of the bottom portion B of the melting groove G to the thickness h2 of the region excluding the melting groove G is 0.1:1 to 0.8:1.

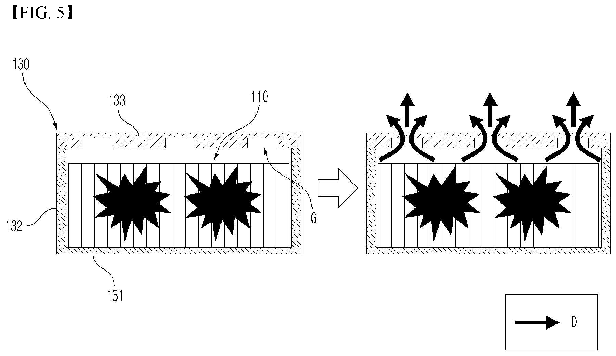

FIG. 5 is a schematic view briefly illustrating a thermal runaway situation of a cell block.

More specifically, FIG. 5 briefly illustrates the direction of movement D of high-temperature gas and flame when they are generated inside the cell assembly 100.

As the cell block accommodated inside the cell assembly 100 of the present disclosure overheats, high-temperature gas and flame may be generated as shown in FIG. 5.

At this time, the high-temperature gas may increase the pressure inside the cell assembly 100, and at this time, as the bottom portion B of the melting groove G is damaged first by the heat, the gas and flame may escape quickly to the upper portion of the cell assembly 100.

A protective coating layer having resistance to heat and flame may be formed on the surface of the module frame 130 of the cell assembly 100 of the present disclosure.

The protective coating layer may be provided on the surface of the module frame 130 by applying a functional binder having at least one characteristic of flame retardancy, flame resistance, and non-combustibility, or may be provided on the surface of the module frame 130 by attaching a functional sheet comprising a material having at least one characteristic of flame retardancy, flame resistance, and non-combustibility to the surface of the module frame 130.

The protective coating layer may be at least one of an upper protective coating layer 400a provided on an outer surface of the module frame 130 and a lower protective coating layer 400b provided on an inner surface of the module frame 130.

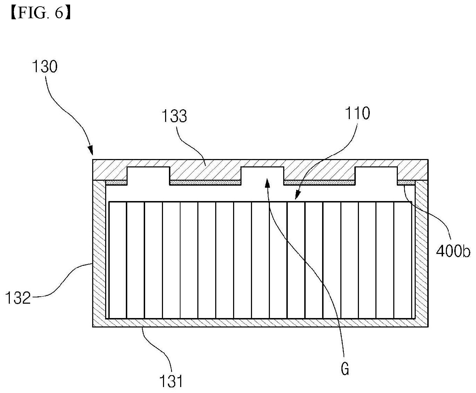

FIG. 6 is a cross-sectional view of a modification of the cell assembly 100 of FIG. 2.

The lower protective coating layer 400b is provided at a lower portion of the cover portion 133, as shown in FIG. 6.

Preferably, the lower protective coating layer 400b is provided only in a region excluding the melting groove G at the lower portion of the cover portion 133. Accordingly, when high-temperature gas and flame are generated due to ignition of the cell block, the melting groove G region excluding the portion where the lower protective coating layer 400b is formed may be damaged and opened more quickly.

Unlike the lower protective coating layer 400b, the upper protective coating layer 400a is provided over the entire upper portion of the cover portion 133. The upper protective coating layer 400a can suppress damage to the cover portion 133 when the cell assembly 100 comes into contact with external high-temperature gas and flame.

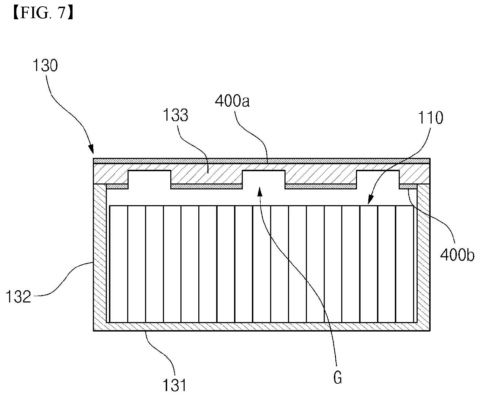

FIG. 7 is a cross-sectional view of another modification of the cell assembly 100 of FIG. 2.

The upper protective coating layer 400a and the lower protective coating layer 400b are provided to face each other with the cover portion 133 interposed therebetween.

Preferably, the lower protective coating layer 400b is provided only in a region excluding the melting groove G at the lower portion of the cover portion 133, and the upper protective coating layer 400a is provided over the entire upper portion of the cover portion 133. Accordingly, when high-temperature gas and flame are generated due to ignition of the cell block, the melting groove G region excluding the portion where the lower protective coating layer 400b is formed may be quickly damaged and opened. Conversely, when the cell assembly 100 comes into contact with high-temperature gas and flame generated from the outside, the upper protective coating layer 400a can prevent damage to the cover portion 133.

Due to the configuration of the melting groove G, the cell assembly 100 of the present disclosure can prevent a large explosion due to the damage of the melting groove G even when the accommodated cell block undergoes thermal runaway and high-temperature gas and flame are generated.

### (Second Embodiment)

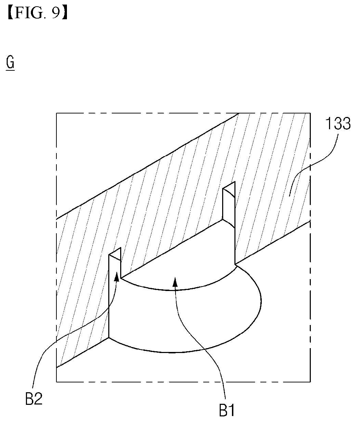

FIG. 8 is a cross-sectional view of a melting groove G included in a cell assembly 100 according to a second embodiment of the present disclosure, and FIG. 9 is a cross-sectional perspective view of the melting groove G of FIG. 8.

The melting groove G included in the cell assembly 100 according to the second embodiment has a structure in which a step is formed in the bottom portion B and the thickness is reduced in a double manner, as shown in FIG. 8 and FIG. 9.

The bottom portion B comprises a first bottom portion B1 and a second bottom portion B2 having a thickness thinner than that of the first bottom portion B1 and formed to have a step with respect to the first bottom portion B1.

Specifically, the second bottom portion B2 is formed at a predetermined depth in the thickness direction of the cover portion 133 from the edge of the first bottom portion B1, and is formed continuously along the edge of the first bottom portion B1. For example, when the first bottom portion B1 is circular, the second bottom portion B2 is formed in the shape of a circular ring.

Based on the thickness direction of the cover portion 133, the ratio of the thickness of the first bottom portion B1 to the thickness of the region excluding the melting groove G is 0.3:1 to 0.8:1.

In addition, the ratio of the thickness of the second bottom portion B2 to the thickness of the region excluding the melting groove G is 0.1:1 to 0.7:1.

When the bottom portion B of the melting groove G is formed to have a step, damage may selectively proceed within the second bottom portion B2, which has a relatively thin thickness.

### (Third Embodiment)

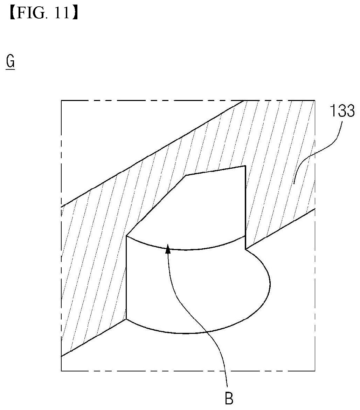

FIG. 10 is a cross-sectional view of a melting groove G included in a cell assembly 100 according to a third embodiment of the present disclosure, and FIG. 11 is a cross-sectional perspective view of the melting groove G of FIG. 10.

The bottom portion B of the cell assembly 100 according to the third embodiment has an inclined surface formed such that the thickness decreases toward the center, as shown in FIG. 10 and FIG. 11.

That is, the melting groove G becomes thinner toward the center.

Accordingly, when high-temperature gas and flame are generated inside the cell assembly 100, damage to the center of the melting groove G may proceed first.

### (Fourth Embodiment)

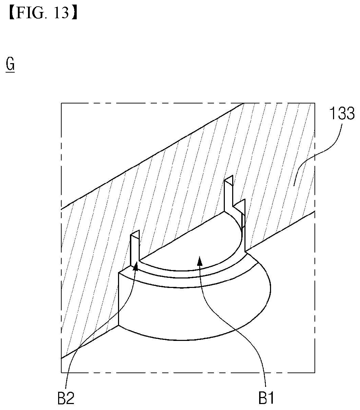

FIG. 12 is a cross-sectional view of a melting groove G included in a cell assembly 100 according to a fourth embodiment of the present disclosure, and FIG. 13 is a cross-sectional perspective view of the melting groove G of FIG. 12.

The melting groove G included in the cell assembly 100 according to the fourth embodiment has a structure in which a step is formed in the bottom portion B and the thickness is reduced in a double manner, as shown in FIG. 12 and FIG. 13.

The bottom portion B comprises a first bottom portion B1 and a second bottom portion B2 having a thickness thinner than that of the first bottom portion B1 and formed to have a step with respect to the first bottom portion B1.

Specifically, the second bottom portion B2 is formed at a predetermined depth in the thickness direction of the cover portion 133 at a position spaced apart from the edge of the first bottom portion B1 by a predetermined distance, and is formed continuously along the edge of the first bottom portion B1. For example, when the first bottom portion B1 is circular, the second bottom portion B2 is formed in the shape of a circular ring.

Based on the thickness direction of the cover portion 133, the ratio of the thickness of the first bottom portion B1 to the thickness of the region excluding the melting groove G is 0.3:1 to 0.8:1.

In addition, the ratio of the thickness of the second bottom portion B2 to the thickness of the region excluding the melting groove G is 0.1:1 to 0.7:1.

When the bottom portion B of the melting groove G is formed to have a step, damage may selectively proceed within the second bottom portion B2, which has a relatively thin thickness.

### Battery Pack 1000

FIG. 14 is a perspective view of a battery pack 1000 of the present disclosure.

The battery pack 1000 of the present disclosure accommodates at least one cell assembly 100 comprising a melting groove G at an upper portion thereof, as shown in FIG. 14.

The battery pack 1000 comprises a pack case 200 in which the cell assembly 100 is seated, and an upper case 300 coupled to the pack case 200 to cover an upper portion of the cell assembly 100.

A plurality of cell assemblies 100 are inserted into the pack case 200 to be seated therein, as shown in FIG. 14.

The pack case 200 and the upper case 300 are coupled to surround the internal cell assembly 100 so that it can be protected from external impact and the like.

Each of the cell assemblies 100 may share an internal space formed by the coupling of the pack case 200 and the upper case 300.

In the battery pack 1000 of the present disclosure, even if any one of the plurality of accommodated cell assemblies 100 undergoes thermal runaway and high-temperature gas and flame are discharged through the melting groove G, the rapid transfer of heat and flame can be suppressed due to the configuration of the cover portion 133 of the other cell assemblies 100.

However, it should be understood that the configurations described in the drawings or the embodiments described in the present specification are merely one embodiment of the present disclosure and do not represent all of the technical ideas of the present disclosure, so various equivalents and modifications may exist that can substitute for these at the time of filing the present application.

### [Description of Reference Numerals]

10: (Prior Art) module frame
20: (Prior Art) battery cell
30: (Prior Art) protective cover
40: (Prior Art) cell block
1000: battery pack
100: cell assembly
120: protective cover
130: module frame
131: bottom support portion
132: side support portion
133: cover portion
200: pack case
300: upper case
400a: upper protective coating layer
400b: lower protective coating layer
G: melting groove
B: bottom portion
B1: first bottom portion
B2: second bottom portion
D: gas and flame movement (direction)

## Claims

1. A cell assembly comprising:
a cell block comprising a plurality of battery cells;
a protective cover coupled to the front and rear of the cell block, respectively; and
a module frame surrounding the circumference of the cell block and coupled to the protective cover so that the cell block is sealed,
wherein the module frame comprises at least one melting groove at an upper portion thereof.

2. The cell assembly of claim 1, wherein an upper protective coating layer having resistance to heat and flame is provided on an outer surface of the module frame.

3. The cell assembly of claim 1, wherein a lower protective coating layer having resistance to heat and flame is provided on an inner surface of the module frame.

4. The cell assembly of claim 3, wherein the lower protective coating layer is provided only in a region excluding the melting groove.

5. The cell assembly of claim 1, wherein the module frame comprises:
a bottom support portion supporting a lower portion of the cell block;
a pair of side support portions extending upward from both ends of the bottom support portion to support side portions of the cell block; and
a cover portion having both ends coupled to the side support portions, respectively, to face the bottom support portion, and covering an upper portion of the cell block,
wherein the melting groove is formed at a lower portion of the cover portion.

6. The cell assembly of claim 5, wherein the melting groove comprises:
a bottom portion formed to a certain depth in a thickness direction of the cover portion.

7. The cell assembly of claim 6, wherein at the cover portion, a ratio of a thickness of the bottom portion of the melting groove to a thickness of a region excluding the melting groove is 0.1:1 to 0.8:1.

8. The cell assembly of claim 6, wherein an edge shape of the bottom portion is any one of a circular shape and a polygonal shape.

9. The cell assembly of claim 6, wherein the bottom portion has a flat shape.

10. The cell assembly of claim 6, wherein the bottom portion has an inclined surface formed such that the thickness gradually decreases toward the center.

11. The cell assembly of claim 6, wherein the melting groove is formed to a certain depth in the thickness direction of the cover portion from the edge of the bottom portion.

12. The cell assembly of claim 6, wherein the bottom portion comprises:
a first bottom portion; and
a second bottom portion formed to a certain depth in the thickness direction of the cover portion from the edge of the first bottom portion, and formed continuously along the edge of the first bottom portion.

13. The cell assembly of claim 12, wherein the second bottom portion is formed to be spaced apart from the edge of the first bottom portion by a predetermined distance.

14. A battery pack in which at least one cell assembly according to claim 1 is accommodated, comprising:
a pack case in which the cell assembly is seated; and
an upper case coupled to the pack case to cover an upper portion of the cell assembly.
